(19) Europäisches Patentamt
European Patent Office
Office européen des brevets

(11) **EP 4 357 133 A1**

(12) **EUROPEAN PATENT APPLICATION**

(43) Date of publication:
**24.04.2024   Bulletin 2024/17**

(21) Application number: **22315242.2**

(22) Date of filing: **18.10.2022**

(51) International Patent Classification (IPC):
**B32B 27/32** [(2006.01)]      **B32B 27/34** [(2006.01)]
**C08J 5/18** [(2006.01)]       **C08L 23/04** [(2006.01)]
**C08L 23/08** [(2006.01)]

(52) Cooperative Patent Classification (CPC):
**C08J 3/005; B32B 27/32; B32B 27/34; C08J 5/18;**
C08J 2323/08; C08J 2371/02; C08J 2377/02;
C08J 2423/08; C08J 2471/02; C08J 2477/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ARKEMA FRANCE**
**92700 Colombes (FR)**

(72) Inventors:
• **Yasuda, Maho**
  **KYOTO, 600-8815 (JP)**

• **David, Romain**
  **KYOTO, 600-8815 (JP)**
• **Pineau, Quentin**
  **27470 SERQUIGNY (FR)**
• **Boissiere, Claude Olivier**
  **27470 SERQUIGNY (FR)**

(74) Representative: **Arkema Patent**
**Arkema France**
**DRD-DPI**
**420, rue d'Estienne d'Orves**
**92705 Colombes Cedex (FR)**

(54) **COMPOSITION BASED ON A POLYAMIDE AND A POLYMER COMPRISING POLYAMIDE BLOCKS AND POLY(TETRAMETHYLENE ETHER) GLYCOL BLOCKS**

(57)    The present invention relates a composition comprising a polyamide, a polymer having polyamide (PA) blocks and poly(tetramethylene ether) glycol (PTMG) blocks, a functionalized polyolefin, and a polyolefin, wherein the polymer (b) comprises at least 40% by weight of PTMG, with regard to the weight of the polymer (b). The present invention also relates to a method of making said composition, a kit for obtaining said composition, an article comprising or made from said composition, and a method of making said article.

EP 4 357 133 A1

**Description**

TECHNICAL FIELD

The present invention relates to a composition comprising a polyamide, a polymer having polyamide (PA) blocks and poly(tetramethylene ether) glycol (PTMG) blocks, a functionalized polyolefin, and a polyolefin. The invention also relates to a method of making said composition, a kit for obtaining said composition, an article comprising or made from said composition, and a method of making said article.

TECHNICAL BACKGROUND

A nonporous breathable film, or a film which is impermeable yet breathable is widely used in various applications. As one of such applications, a nonporous breathable film is advantageously used for packaging, especially for food packaging, a package of a fresh product such as a fruit, a vegetable, a freshly cut meat and fish, for example. The quality and shelf life of these fresh products can be enhanced by optimizing the environment within the package enclosing them, especially by adjusting a moisture vapor transmission rate (MVTR), a permeability and a selectivity of gas such as $CO_2$ and $O_2$. MVTR, also called water vapor transmission rate (WVTR), is the amount of water vapor that passes through a substance or material over a specific period of time. For food packaging and storage, too high values of MVTR is not desired since this may lead to withering of fruits or vegetables.

Document US 5959042 discloses a material for obtaining a nonporous breathable film comprising (a) a polyamide, (b) a polymer having PA blocks and polyether PEG blocks, (c) optionally a polyolefin, and (d) a functionalized polyolefin, in which the amounts by weight of a, b, c, and d are such that a>0, b>0, c+d>0, a+b+c+d=100, a/b>0.2, (a+b)/(c+d)>1, and b/(a+b+c+d)<0.5.

Document EP 0476963 discloses a polymeric blend for preparing a nonporous breathable film comprising a hydrophilic block poly(ether-co-amide) containing between about 20 and about 80 weight % PEG blocks, and a hydrophobic polymer selected from any of: a) a block poly(ether-co-amide) containing essentially no PEG blocks, b) polyamide, c) a polyester, or d) a polyurethane.

However, there is still a need to optimize the MVTR, gas permeability and/or processability of films. Further, these documents do not mention about haze or transparency of the obtained film. Haze is a measurement of the scattering of light as it passes through a transparent material. As a higher level of haze results in a poor transparency, haze is one of critical quality parameters of a film or a sheet material in packaging applications. There is thus a need for a composition which is readily processable to make a packaging material, such as a film or a sheet, having optimized MVTR and gas permeability for preserving fresh products in an ideal environment, as well as improved haze or transparency.

SUMMARY OF THE INVENTION

The present invention concerns a composition comprising:

(a) a polyamide (PA),
(b) a polymer having polyamide (PA) blocks and poly(tetramethylene ether) glycol (PTMG) blocks,
(c) a functionalized polyolefin, and
(d) a polyolefin,

wherein the polymer (b) comprises, at least 40%, preferably at least 50% by weight of PTMG, with regard to the weight of the polymer (b).

In some embodiments, the weight ratio of (a)/(b) is < 1, preferably < 0.5, typically between 0.2 to 0.5.

The present invention makes it possible to address the need expressed above. It provides, more particularly, a film or a sheet with suitable MVTR and gas permeability, which contributes to an ideal environment in food packaging, thus to a better quality and longer shelf life of packaged food products. Furthermore, it provides a film or a sheet with improved haze or transparency, which is desirable in packaging applications as it would not hinder the visibility of the packaged contents.

This is accomplished through a combination of a polyamide, a polymer having PA and PTMG blocks, a functionalized polyolefin and a polyolefin. Notably, the composition according to the invention advantageously enables to provide a film with an improved quality in MVTR, gas permeability, processability and haze. As such, the composition according to the invention is especially useful for making a film, a sheet, or a bag to be used for food packaging. Such package based on the composition according to the invention may reduce withering and prevent mold growth of fresh products such as fruits and vegetables enclosed therein during the storage and/or transport. Further, the packaged contents can be clearly seen through the package of higher transparency.

DESCRIPTION OF EMBODIMENTS

The invention will now be described in more detail without limitation in the following description.

A composition according to the invention comprises (a) a polyamide (PA), (b) a polymer having polyamide (PA) blocks and poly(tetramethylene ether) glycol (PTMG) blocks, (c) a functionalized polyolefin, and (d) a polyolefin.

(a) Polyamide

In the present application, the term "polyamide" stands for the condensation products:

- of one or several amino-acids such as aminocaproic, amino-7-heptanoic, amino-11-undecenoic and amino-12-dodecanoic acid; or one or several corresponding lactames such as caprolactame, oenanlactame and lauryllactame; or
- of one or several substantially stoechiometric combinations of one or several aliphatic and/or cycloaliphatic and/or aromatic-aliphatic diamines, or salts thereof, with one or several aliphatic or aromatic carboxylic diacids or salts thereof; examples of such diamines are hexamethylenediamine, dodecamethylenediamine, metaxylylenediamine, bis(4-aminocyclohexyl)-methane (BACM), bis (3-methyl-4-amino-cyclohexyl)-methane (BMACM) and trimethylhexamethylenediamine, examples of diacids being terephthalic, isophthalic, adipic, azelaic, sebacic, suberic and docedanedicarboxylic acid; or
- any mixture of the above monomers; and
- any mixture of the resulting condensation products, optionally with other polymers compatible with the polyamides.

By way of example, the polyamide (PA) can be chosen from PA6, PA6.6, PA6.10, PA10.10, PA10.12, PA11, PA12, PA6.12 and PA12.12, the first figure indicating the number of carbon atoms of the diamine and the second figure indicating the number of carbon atoms of the dicarboxylic acid; or the sole figure indicating the number of carbon atoms in the repeat unit obtained from an amino acid or lactame. The molecular weight of the polyamides can vary greatly, as those skilled in the art will understand.

Preferably, the mean carbon content of the repeating units of the polyamide is at least 8, preferably from 8 to 14, more preferably from 10 to 12.

Typically, the polyamide (PA) is chosen from PA6.10, PA10.10, PA10.12, PA11, PA12, PA 6.12 and PA12.12.

The molecular weight of the polyamides can vary greatly, as those skilled in the art will understand.

The term "mean carbon content of the repeating units" means the mean of the numbers of carbon atoms of each repeating unit present in the polyamide, weighted by the molar proportion of said repeating unit relative to the total amount of polyamide blocks. For example, when the polyamide comprises a single repeating unit, as in the case of a PA X or of PA X.Y as defined above, the mean carbon content of the repeating units of the polyamide blocks is equal to the number of carbon atoms of said repeating unit, given that a polyamide repeating unit contains, in a known manner, only one amide function. In the case of a PA X block, the number of carbon atoms of the repeating unit is X. In the case of a PA X.Y block, the number of carbon atoms of the repeating unit is $(X + Y)/2$ since the unit X.Y comprises two amide functions.

Mixtures of polyamides are also possible.

Preferably, the polyamide (PA) in (a) is or comprises PA11 or PA12, preferably PA11. PA11 advantageously has a good miscibility with polyolefins, thus providing a good processability of the composition, that facilitates making a thinner film or sheet.

(b) Polymer PEBA

In the present application, a polymer having polyamide blocks and polyether blocks may also be referred to as a polyether block amide (PEBA).

The polymer (b) having polyamide (PA) blocks and poly(tetramethylene ether) glycol (PTMG) blocks may also be referred to as PA/PTMG PEBA.

In some embodiments, the polymer (b) consists of polyamide blocks and PTMG blocks.

Such polymers having PA blocks and PTMG blocks result from the co-polycondensation of polyamide sequences having reactive terminations and polyether sequences having reactive terminations, such as, among others:

- polyamide sequences having diamine terminations with polyoxyalkylene sequences having dicarboxylic terminations;
- polyamide sequences having dicarboxylic terminations with polyoxyalkylene sequences having diamine terminations obtained by cyanoethylation and hydrogenation of aliphatic dihydroxy alpha-omega polyoxy alkylene sequences, known as polyetherdiols;

- polyamide sequences having diamine terminations with polyetherdiol sequences, the products obtained being, in this particular case, polyetheresteramides (abbreviated to PEEA below).

Such polymers are for example described in French patents Ser. Nos. 74 18913 and 77 26678 as well as in the following U.S. Pat. Nos.: 4,331,786, 4,115,475, 4,195,015, 4,839,441, 4,864,014, 4,230,838 and 4,332,920 the content of which is incorporated herein by reference.

The polyamide sequences having dicarboxylic terminations are for example obtained from condensation of aminocarboxylic alpha-omega acids, from lactames or substantially stoechiometric combinations of carboxylic diacids and diamines, in the presence of a chain limiting carboxylic diacid. The polyamide blocks can be PA6, PA6.6, PA6.10, PA10.10, PA10.12, PA11, PA12, PA6.12 and PA12.12, are preferably PA10.10, PA10.12, PA11, PA12, or PA11.12. Preferably, the polyamide blocks are PA11 or PA12, preferably PA11.

Preferably, the mean carbon content of the repeating units of the polyamide blocks is at least 8, preferably from 8 to 14, more preferably from 10 to 12.

According to one embodiment, the polyamide of the polyamide blocks in (b) is the same as the polyamide in (a).

The number-average molar mass Mn of the polyamide sequences PA varies between 300 and 15,000 and, preferably, from 600 to 5,000.

Regardless of whether the polyether blocks are included in the polymer chain having polyamide blocks and polyether blocks in the form of diols or in the form of diamines, they will be called, for the sake of simplicity, PTMG blocks. The number-average molar mass Mn of the polyether sequences is comprised between 100 and 6,000 and is preferably between 300 and 3,000.

The number-average molar mass may be set by the content of chain limiter. It may be calculated according to the equation:

$$M_n = n_{monomer} \times MW_{repeating\ unit} / \dot{n}_{chain\ limiter} + MW_{chain\ limiter}$$

In this formula, $n_{monomer}$ represents the number of moles of monomer, $n_{chain\ limiter}$ represents the number of moles of (e.g. diacid) limiter in excess, $MW_{repeating\ unit}$ represents the molar mass of the repeating unit, and $MW_{chain\ limiter}$ represents the molar mass of the limiter in excess. The number-average molar mass of the rigid blocks and of the flexible blocks can be measured before the copolymerization of the blocks by gel permeation chromatography (GPC).

The polymers having PA blocks and PTMG blocks can also comprise randomly-distributed moieties. Such polymers can be prepared by simultaneously reacting polyether and precursors of the polyamide blocks. For example, reaction can be caused between a polyetherdiol, a lactame, (or a corresponding alpha-omega aminoacid) and a chain limiting diacid, in the presence of a small amount of water. A polymer is obtained having essentially polyether blocks, polyamide blocks of greatly varying length, along with the various reagents that have reacted randomly and which are randomly distributed along the polymer chain.

The polymers having PA blocks and PTMG blocks may have, for example, a Shore D hardness typically comprised between 20 and 75 and, advantageously, between 30 and 70, and an inherent viscosity comprised between 0.8 and 2.5, measured in meta-cresol at 20°C for an initial concentration of 0.5% m/m.

The polymers having PA blocks and PTMG blocks can be formed, in by weight, by 5 to 85% of polyether PTMG blocks (and 95 to 15% PA) and, preferably from 20 to 80% polyether PTMG blocks (and from 80 to 20% PA) and, more preferably, from 30 to 70% polyether PTMG blocks (and 70 to 30% PA)

Preferably, the polymer having PA blocks and PTMG blocks comprises a single type of block. Advantageously, a polymer having PA11 blocks and PTMG blocks (PA11/PTMG PEBA), or a polymer having PA12 blocks and PTMG blocks (PA12/PTMG PEBA) is employed. PA11 advantageously has a good miscibility with polyolefins, thus providing a good processability of the composition, that facilitates making a thinner film or sheet.

In some embodiments, the polymer (b) may further comprise, in addition to PA blocks and PTMG blocks, polyethylene (PE) blocks other than PTMG. For example, the polymer (b) may further comprise polyethylene glycol (PEG), polypropylene glycol (PPG) and/or Poly(oxytrimethylene)glycol (PO3G) blocks.

In such case, the polymer (b) comprises at least 40% by weight, preferably at least 50% by weight, or at least 60%, or at least 90% of PTMG, with regard to the total weight of the polymer (b).

One can however also employ blends of polymers having polyamide blocks and polyether blocks.

Such polymers having polyamide blocks and polyether blocks are available commercially from ARKEMA under the commercial name Pebax®, or from EVONIK under the commercial name VESTAMID®.

(c) Functionalized polyolefin

In the present application, the term "functionalized polyolefin" represents polymers of alpha-olefins and reactive units (functionalities); such reactive units are acid, anhydride or epoxy functionalities.

The functionalized polyolefin (c) serves as a compatibilizer or a compatibilizing agent for compatibilizing polyamides and polyolefins.

As examples, we can cite the polyolefins previously grafted or co- or ter-polymerized by unsaturated epoxides such as glycidyl (meth)acrylate, or by carboxylic acids or the corresponding salts or esters such as (meth)acrylic acid (the latter being able to be partially or completely neutralized by metals such as Zn, etc.) or, further, by carboxylic acid anhydrides such as maleic anhydride. The term "co- or ter-polymerized" means that the functional groups are then integrated within the main polymer chain.

The functionalized polyolefin (c) can be the following (co)polymers, grafted with maleic anhydride or glycidyl methacrylate, in which the grafting rate is for example from 0.01 to 5% by weight:

- PE, PP, copolymers of ethylene with propylene, butene, hexene or octene containing, for example, 35 to 80% by weight ethylene;
- ethylene and vinyl acetate (EVA) copolymers containing up to 40% by weight vinyl acetate;
- ethylene and alkyl (meth)acrylate copolymers containing up to 40% by weight alkyl(meth)acrylate;
- ethylene and vinyl acetate (EVA) and alkyl (meth)acrylate copolymers, containing up to 40% by weight EVA and alkyl (meth)acrylate;
- ethylene/propylene copolymers having a majority of propylene grafted with maleic anhydride and then condensed with mono-aminated polyamide (or a polyamide oligomer). These products are described in EP 0342066.

The functionalized polyolefin (c) can also be a co- or ter-polymer of at least one of the following units: (1) ethylene, (2) alkyl (meth)acrylate or (meth) acrylic acid or saturated carboxylic acid vinyl ester and (3) maleic anhydride or glycidyl (meth)acrylate.

As an example of functionalized polyolefins of the latter type, the following copolymers can be mentioned in which ethylene represents preferably at least 60% by weight and where the monomer (3) represents, for example, 0.1 to 10% by weight of the copolymer:

- ethylene/alkyl (meth)acrylate or (meth)acrylic acid/maleic anhydride or glycidyl methacrylate copolymers;
- ethylene/vinyl acetate/maleic anhydride or glycidyl methacrylate copolymers;
- ethylene/vinyl acetate/alkyl (meth)acrylate or (meth)acrylic acid/maleic anhydride or glycidyl methacrylate copolymers.

In the above copolymers, the (meth)acrylic acid can be put in the form of a Zn or Li salt.

The term "alkyl (meth)acrylate" preferably stands for $C_1$ to $C_6$ alkyl methacrylates and acrylates and can be chosen from, methyl, ethyl, n-butyl, iso-butyl and 2-ethylhexyl acrylate, and most preferably methyl and ethyl methacrylate.

Advantageously, the functionalized polyolefin (c) is or comprises an ethylene/butyl acrylate/maleic anhydride copolymer or an ethylene/ethyl acrylate/glycidyl methacrylate copolymer.

Moreover, these polyolefins can also be cross-linked using any suitable process or agent (di-epoxy, diacid, peroxy, etc.); the expression functionalized polyolefin also covers the above polyolefins crosslinked with a bi-functional reagent such as di-acid, di-anhydride, di-epoxy, etc.

The molecular weight, MFI index and density of these functionalized polyolefins can also vary greatly, as those skilled in the art will understand.

Mixtures of functionalized polyolefins are also possible.

Preferably, the functionalized polyolefin (c) is or comprises an ethylene and glycidyl methacrylate (GMA) copolymer. GMA gives reactivity versus OH, COOH, $NH_2$, for example, leading to optimal dispersion during melt mixing with engineering thermoplastics such as polyamide, polyesters, polyphenylene sulfide. As an ethylene copolymer, ethylene- GMA copolymer is compatible with LDPE in substantially all proportions, and with almost all other ethylene copolymers. The ethylene-GMA copolymer advantageously has a good miscibility with polyolefins, thus providing a good processability, that facilitates making a thinner film or sheet.

(d) Polyolefin

The polyolefin (d) is a homopolymer or copolymer of alpha-olefins and/or diolefins, such as for example ethylene, propylene, butene-1, octene-1, butadiene.

Examples are:

homopolymers such as polyethylene, in particular LDPE (low density polyethylene), HDPE (high density polyethylene), LLDPE (linear low density polyethylene), or VLDPE (very low density polyethylene), polyethylene metallocene or polypropylene;

ethylene/alpha-olefin copolymers such as ethylene/propylene;

ethylene propylene rubbers (EPRs), styrene/ethylene-butene/butadiene (SEBS), styrene/butadiene/styrene (SBS), styrene/isoprene/styrene (SIS), styrene/ethylene-propylene/styrene (SEPS) and ethylene/propylene/diene (EPDM) block copolymers;

copolymers of ethylene with at least one product selected from unsaturated carboxylic acids salts or esters such as alkyl (meth)acrylate, typically methyl acrylate, or vinyl esters of saturated carboxylic acids such a vinyl acetate, in which the proportion of comonomer can be up to 40% by weight.

The copolymers mentioned above can be copolymerized in a random or sequenced manner and have a linear or branched structure.

The polyolefins may have, for example, a density comprised between 0.86 and 0.965 and a melt flow index MFI comprised, for example, between 0.3 and 40 following ASTM D1238 with a standard load of 2.16 kg and at a die temperature of 190°C. The polyolefins can also be cross-linked, using any suitable agent (epoxy, etc.).

Polyolefin mixtures are also possible.

Preferably, the polyolefin in (d) is or comprises an ethylene-methyl acrylate copolymer or LLDPE.

Composition

The composition according to the invention comprises (a) the polyamide, (b) the polymer having polyamide (PA) blocks and poly(tetramethylene ether) glycol (PTMG) blocks, (c) the functionalized polyolefin, and (d) the polyolefin, as defined above.

In some embodiments, in the composition, the amount by weight of (a) is smaller than the amount by weight of (b).

In some embodiments, the ratio of the amount by weight of (a) to the amount by weight of (b), namely a/b, is from 0.05 to 0.95, preferably from 0.1 to 0.5, more preferably from 0.25 to 0.45.

In some embodiments, the weight ratio of (b) /(c) is < 4.

In some embodiments, (a) is present in an amount of 10-30% by weight relative to the total weight of (a)+(b)+(c), (b) is present in an amount of 40-80% by weight relative to the total weight of (a)+(b)+(c), and (c) is present in an amount of 10-30% by weight relative to the total weight of (a)+(b)+(c).

In some embodiments, in the composition, (d) is present in an amount of 5-70% by weight relative to the total weight of the composition, namely relative to the total weight of (a)+(b)+(c)+(d).

In some embodiments, (a) is present in an amount of 4-20% by weight relative to the total weight of the composition, namely the total weight of (a)+(b)+(c)+(d), (b) is present in an amount of 15-70% by weight relative to the total weight of (a)+(b)+(c)+(d), (c) is present in an amount of 5-20% by weight relative to the total weight of (a)+(b)+(c)+(d), and (d) is present in an amount of 5-70% by weight relative to the total weight of (a)+(b)+(c)+(d).

Preferably, the composition according to the invention does not comprise a styrene maleic anhydride (SMA).

The composition according to the invention may also be mixed with further additives, such as fillers, pigments, and/or dyes.

A method of making the composition

The invention also relates to a method of making the composition according to the invention, comprising a step of blending:

(a) a polyamide (PA),
(b) a polymer having polyamide (PA) blocks and poly(tetramethylene ether) glycol (PTMG) blocks,
(c) a functionalized polyolefin, and
(d) a polyolefin,

wherein the polymer (b) comprises at least 40%, preferably at least 50% by weight of PTMG, with regard to the weight of the polymer (b).

The method comprises a step of blending (a) a polyamide, (b) a polymer having polyamide (PA) blocks and poly(tetramethylene ether) glycol (PTMG) blocks, (c) a functionalized polyolefin, and (d) a polyolefin.

Each of (a) the polyamide, (b) the polymer having polyamide (PA) blocks and poly(tetramethylene ether) glycol (PTMG) blocks, (c) the functionalized polyolefin, and (d) the polyolefin are those defined above.

(a), (b), (c) and (d) may be blended together in one step. Alternatively, one or some of (a), (b), (c) and (d) may be blended separately in any order.

In some embodiments, the method comprises a step (i) of blending (a) a polyamide, (b) a polymer having polyamide (PA) blocks and poly(tetramethylene ether) glycol (PTMG) blocks, (c) a functionalized polyolefin to obtain a base polymer blend or mixture, and a step (ii) of blending (d) a polyolefin to the base polymer blend or mixture of step (i).

Preferably, the base polymer blend or mixture is in the form of pellets before the step (ii).

The steps of blending may be a step of dry-blending the components in a powdered form.

Alternatively and preferably, the steps of blending may be a step of melt-blending part or all of the components. Melt-blending may be in particular carried out by compounding. For example, melt-blending may be carried out in an extruder or co-kneader, more preferably a twin-screw extruder or a co-kneader.

The melt-blending may be carried out at a temperature from 140 to 300°C, preferably of from 160 to 270°C, more preferably of from 180 to 210°C.

Preferably, (d) the polyolefin is dry-blended to the base polymer blend or mixture.

At the end of the steps of blending, the composition may be produced for example in the form of flakes, crumbs, granules or pellets. Alternatively, it may be further ground or milled to a powder. It may also be provided in the form of a paste.

The step (i) of blending (a), (b) and (c) to obtain a base polymer blend or mixture, and the step (ii) of blending (d) to the base mixture may be performed simultaneously or in a temporally separated manner. Specifically, the step (i) may be reworded as a step of obtaining a base polymer blend or mixture by blending (a), (b), and (c), and the step (ii) may be performed by blending (d) to the base polymer blend or mixture obtained by the step (i) previously, for example several hours, days, or months before the step (ii).

Kit for obtaining the composition

The invention also relates to a kit for obtaining the composition according to the invention.

The kit comprises a first component and a second component The first component comprises (a) a polyamide (PA), (b) a polymer having polyamide (PA) blocks and poly(tetramethylene ether) glycol (PTMG) blocks, and (c) a functionalized polyolefin, preferably the amount by weight of (a) being smaller than the amount by weight of (b). The second component comprises (d) a polyolefin, preferably the amount of (d) being 5-70% by weight relative to the total weight of the composition obtained from the kit.

Each of (a) the polyamide, (b) the polymer having polyamide (PA) blocks and poly(tetramethylene ether) glycol (PTMG) blocks, (c) the functionalized polyolefin, and (d) the polyolefin are those defined above.

In some embodiments, the first component and the second component may be contained, stored, or packaged in separate containers respectively, and such separate containers of two components may be optionally packaged together, by any appropriate form of packaging. Alternatively, the containers of two components may be provided separately without any common packaging.

Article comprising or made from the composition and a method of making the article

The invention also relates to an article comprising or made from the composition according to the invention, and a method of making said article.

The article can be prepared using any method known in the art, for example by extrusion, injection, molding, etc.

In some embodiments, the article is a film, a sheet, or a bag.

The films obtained from the composition according to the invention are nonporous and breathable, in other words they are permeable to water vapor but impermeable to water, and, more generally, permeable to gasses but impermeable to liquids.

The articles obtained from the composition according to the invention, especially in form of films, give improved values of MVTR. The improved values of MVTR may be more than 4 $g/m^2/24h$, preferably between 4 and 500 $g/m^2/24h$, more preferably between 4 and 200 $g/m^2/24h$, measured at 23°C, for a relative humidity level of 50% at a thickness of 25 $\mu$m following the method described in ASTM standard E 96 B-Water method. Such films enable an ideal environment in a package of fresh products such as fruits and vegetables.

The gas selectivity is defined as the ratio of the permeability of two pure gases, measured separately under the same conditions. The permeability ratio of $CO_2$ to $O_2$ of the films obtained from the composition according to the invention is typically lower than 12 and preferably between 4 and 10, these values are valid at 0% relative humidity (0% RH) and 23°C.

The articles obtained from the composition according to the invention, especially in form of films, give improved values of Haze. The improved values of Haze may be less than 50%, preferably less than 40%, more preferably less than 30 %, measured according to ASTM D 1003-97 Procedure B, at a thickness of 25 $\mu$m, using a spectrophotometer (Konica Minolta model CM-3610d) in transmittance and Haze mode with a wavelength range from 360 to 740 nm and a wavelength pitch of 10 nm, under standard Illuminant A and at an angle of 10 degrees. Such films are advantageously used for packaging with a higher transparency.

These films can be prepared using any method known in the art, for example by extrusion or molding. The films have a thickness comprised, typically, between 5 and 500 $\mu$m, preferably between 5 and 250 $\mu$m, more preferably between 10 and 100 $\mu$m, preferably between 15 and 60 $\mu$m. The films can be associated with other films and/or supports. For example, the film obtained from the composition according to the invention may be coextruded or laminated on a support such as a grille made of polyethylene or of PVC.

In some embodiments, the article made from the composition according to the invention is used for packaging, for example food packaging and a package for fresh products, such as fruits, vegetables, freshly cut meats and fishes. For example, the film obtained from the composition according to the invention may be only part of a package, the other part being made of any other materials.

The invention also relates to the use of an article as defined above to for food packaging.

The following examples illustrate the invention without limiting it.

## EXAMPLES

The following examples illustrate the invention without limiting it.

Compositions having the blend ratios outlined in Table 1 were prepared. Specifically, (a) PA, (b) PEBA, and (c) functionalized polyolefin were blended and compounded using a twin screw extruder into pellets. The obtained pellets were blended with (d) polyolefin, and extruded into films.

Table 1

| Examples | (a) PA | (b) PEBA | | (c) functionalized polyolefin | (d) polyolefin | | a/b |
|---|---|---|---|---|---|---|---|
| | Rilsan® BESNO TL | PEBA 1 | PEBA 2 | Lotader® AX8840 | Lotryl® 29MA03T | Ultzex® 2022L | |
| 1 | 15.2 | 60.8 | | 19 | 5 | | 0.25 |
| 2 | 13.6 | 54.4 | | 17 | 15 | | 0.25 |
| 3 | 9.6 | 38.4 | | 12 | 40 | | 0.25 |
| 4 | 4.8 | 19.2 | | 6 | 70 | | 0.25 |
| 5 | 15.2 | 60.8 | | 19 | | 5 | 0.25 |
| 6 | 13.6 | 54.4 | | 17 | | 15 | 0.25 |
| 7 | 9.6 | 38.4 | | 12 | | 40 | 0.25 |
| 8 | 4.8 | 19.2 | | 6 | | 70 | 0.25 |
| CE9 | 22.8 | | 53.2 | 19 | 5 | | 0.43 |
| CE10 | 20.4 | | 47.6 | 17 | 15 | | 0.43 |
| CE11 | 14.4 | | 33.6 | 12 | 40 | | 0.43 |
| CE12 | 22.8 | | 53.2 | 19 | | 5 | 0.43 |
| CE13 | 20.4 | | 47.6 | 17 | | 15 | 0.43 |
| CE14 | 14.4 | | 33.6 | 12 | | 40 | 0.43 |
| Unit: weight % | | | | | | | |

- Rilsan® BESNO TL: polyamide 11 (PA11) available from ARKEMA
- PEBA 1: PA11/PTMG 1000/1000 (Mn: PA 11 blocks with molecular weight of 1000g/mol and PTMG blocks with a molecular weight of 1000 g/mol)
- PEBA 2: PA11/PEG 1000/1500 (Mn: PA 11 blocks with molecular weight of 1000g/mol and PEG blocks with a molecular weight of 1500 g/mol)
- Lotader® AX8840: a random copolymer of ethylene and glycidyl methacrylate (GMA) available from SK functional polymer

- Lotryl® 29MA03T: a random ethylene-methyl acrylate copolymer from SK functional polymer
- Ultzex® 2022L: linear low density polyethylene (LLDPE) available from Prime Polymer

For the films of examples 1-16 prepared as above, the measurements were performed under the following conditions:

- Machine: GTR-30XADJ4, G2700T
- Test surface: $15.2 \times 10^{-4} m^2$
- Detection: gas chromatography, thermal conductivity (TCD)
- Temperature: 23°C
- Relative humidity: 0%
- Carrier gas: Helium (pressure: 1bar)
- Diffusant gases: $O_2$, $CO_2$ (pressure: 1bar each)

Permeabilities to $CO_2$ and $O_2$ of the films were measured according to the method described in JIS K7126 using a gas chromatography at the temperature of 23°C and the relative humidity of 0% for a film thickness of 25 $\mu$m. The results of permeabilities to $CO_2$ and $O_2$ are given in ml/m$^2$ 24h atm in Table 2 below.

The Moisture Vapor Transmission Rate (MVTR) represents the amount of water vapor that passes through a film or structure over a period of 24 hours. For the films of 25 $\mu$m thickness prepared as above, MVTR was measured according to the method described in ASTM E 96 B-water method at 23°C, 50%RH in a Heraeus Votsch oven. The results of MVTR are given in g/m$^2$/24h in Table 2 below.

In addition to the above examples 1-16, MVTR was measured according to the same method as above for a film of 25 $\mu$m thickness of pure LLDPE as a comparative example. The film of pure LLDPE was prepared by 100 weight % of Ultzex® 2022L. The measured MVTR (25 $\mu$m, B method) was 2 g/m$^2$/24h.

Further, haze was measured according to ASTM D 1003-97 Procedure B, using a spectrophotometer (Konica Minolta model CM-3610d) in transmittance and Haze mode with a wavelength range from 360 to 740 nm and a wavelength pitch of 10 nm, under standard Illuminant A and at an angle of 10 degrees, for the films prepared as above (25 $\mu$m). The results of haze are given in % in Table 2 below.

Table 2

| Examples | P($O_2$) (ml/m$^2$ 24h atm) | P($CO_2$) (ml/m$^2$ 24h atm) | MVTR B method (g/m$^2$/24h) | Haze A (%) |
|---|---|---|---|---|
| 1 | | | 189 | 21 |
| 2 | 14720 | 151200 | 142 | 17 |
| 3 | | | 76 | 28 |
| 4 | | | | 18 |
| 5 | | | 178 | 18 |
| 6 | 12672 | 89600 | 129 | 16 |
| 7 | 11200 | 60800 | 20.4 | 20 |
| 8 | | | 4.2 | 13 |
| CE9 | | | 3038 | 46 |
| CE10 | 17848 | 368640 | 2452 | 61 |
| CE11 | | | 449 | 54 |
| CE12 | | | 3135 | 59 |
| CE13 | 14640 | 188160 | 2236 | 63 |
| CE14 | 14560 | 89600 | 67 | 60 |

It can be seen from Table 2 that the films of examples 1-8 provided MVTR results within a lower and defined range (from 4.2 to 189), whereas MVTR results for the films of comparative examples 9-14 varied over a wide range from 67 to 3135. Too high values of MVTR is not desired since this may lead to withering of fruits or vegetables. The films of examples 1-8 also provided a lower and defined range of haze (from 13 to 28) compared to the film of examples 9-14 (from 46 to 63).

As such, the composition according to the invention advantageously provides a film having both a good transparency and an ideal range of MVTR which is suitable for packaging fresh products. In other words, the composition according to the invention enables an improved control of both MVTR and haze of a film.

Besides, as seen from examples 9-14, the films based on PA/PEG PEBA required a larger ratio of polyolefin (d) to be blended in order to achieve the reduced range of MVTR. In contrast, as seen from examples 1-8, the composition based on PA/PTMG PEBA according to the invention achieved the relatively low range of MVTR for a broader range of polyolefin from 5 to 70%. As such, the composition according to the invention allows a broader range of choice for the polyolefin to be blended. The ratio of polyolefin to be blended can be flexibly increased or decreased depending on the applications or needs, while still achieving the intended quality of MVTR and haze. For example, the ratio of a bio-based or plant-based material as PA/PTMG PEBA can be increased to make a highly transparent and nonporous breathable film.

In other words, the composition according to the invention enables the film property to be optimized and controlled in an appropriate range of MVTR and haze readily. The ratio of polyolefin (d) to be blended can be selected from the wider range according to the needs or applications. The polyolefin (d) can be blended to the base polymer mixture by easy process, for example by dry-blending. As such, the film property such as MVTR and haze can be more readily controlled and optimized.

## Claims

1. Composition comprising:

   (a) a polyamide (PA),
   (b) a polymer having polyamide (PA) blocks and poly(tetramethylene ether) glycol (PTMG) blocks,
   (c) a functionalized polyolefin, and
   (d) a polyolefin,

   wherein the polymer (b) comprises at least 40%, preferably at least 50% by weight of PTMG, with regard to the weight of the polymer (b).

2. Composition according to claim 1, wherein the weight ratio of (a)/(b) is < 1, preferably < 0.5, typically between 0.2 to 0.5.

3. Composition according to any one of the preceding claims, wherein the polyamide in (a) is or comprises PA6, PA6.6, PA6.10, PA10.10, PA10.12, PA11, PA12, PA6.12 and/or PA12.12, preferably PA11 and/or PA 12.

4. Composition according to any one of the preceding claims, wherein the polyamide blocks in polymer (b) is or comprises PA6, PA6.6, PA6.10, PA10.10, PA10.12, PA11, PA12, PA6.12 and/or PA12.12, preferably PA11 and/or PA 12.

5. Composition according to any one of the preceding claims, wherein the mean carbon content of repeating units of the polyamide (a) and/or of the polyamide blocks in the polymer (b) is at least 8, preferably from 8 to 14, more preferably from 10 to 12.

6. Composition according to any one of the preceding claims, wherein the polyamide of the polyamide blocks in (b) is the same as the polyamide in (a).

7. Composition according to any one of the preceding claims, wherein the functionalized polyolefin in (c) is or comprises an ethylene/butyl acrylate/maleic anhydride copolymer or an ethylene/ethyl acrylate/glycidyl methacrylate copolymer, preferably, a copolymer of ethylene and glycidyl methacrylate (GMA).

8. Composition according to any one of the preceding claims, wherein the polyolefin in (d) is or comprises a copolymer of ethylene and methyl acrylate or a linear low-density polyethylene (LLDPE).

9. Composition according any one of the preceding claims, wherein (d) is present in an amount of 5-70% by weight relative to the total weight of the composition.

10. A method of making a composition, comprising a step of blending:

(a) a polyamide (PA),
(b) a polymer having polyamide (PA) blocks and poly(tetramethylene ether) glycol (PTMG) blocks,
(c) a functionalized polyolefin, and
(d) a polyolefin,

wherein the polymer (b) comprises at least 40%, preferably at least 50% by weight of PTMG, with regard to the weight of the polymer (b).

11. Method according to claim 10, wherein the blending step comprises the following steps:

(i) blending (a) a polyamide, (b) a polymer having polyamide (PA) blocks and poly(tetramethylene ether) glycol (PTMG) blocks, and (c) a functionalized polyolefin to obtain a base polymer blend or mixture; and
(ii) blending (d) a polyolefin to the base polymer blend or mixture of step (i).

12. Article comprising or made from the composition according to any one of claims 1 to 9, preferably the article being a film, a sheet or a bag.

13. Article according to claim 12, having a MVTR of between 4 and 500 $g/m^2/24h$, preferably between 4 and 200 $g/m^2/24h$, measured at 23°C, for a relative humidity level of 50% at a thickness of 25 $\mu$m and/or a haze less than 50%, preferably less than 40%, more preferably less than 30 %, at a thickness of 25 $\mu$m.

14. Method of making the article according to claim 12 or 13, comprising the following steps:

- obtaining the composition by the method according to any one of claims 10 to 11; and
- extruding or molding the composition into a film or a sheet.

15. Use of an article according to any one of claims 1 to 10, for food packaging.

Europäisches
Patentamt

European
Patent Office

Office européen
des brevets

# EUROPEAN SEARCH REPORT

**Application Number**

EP 22 31 5242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 051 649 A (ALEX PATRICK [FR] ET AL) 18 April 2000 (2000-04-18) <br> * claim 1 * <br> * column 3, line 47 - line 49 * <br> * column 5, line 31 - column 6, line 44 * <br> ----- | 1-15 | INV. <br> B32B27/32 <br> B32B27/34 <br> C08J5/18 <br> C08L23/04 <br> C08L23/08 |
| X | WO 2021/205117 A1 (ARKEMA FRANCE [FR]) 14 October 2021 (2021-10-14) <br> * page 1, line 9 - line 13 * <br> * Composition I; <br> table 4 * <br> * page 21, line 30 - page 24, line 16 * <br> * claims 1-15 * <br> * Composition I; <br> table 5 * <br> ----- | 1-14 | |
| X | US 2005/165175 A1 (MONTANARI THIBAUT [FR] ET AL) 28 July 2005 (2005-07-28) <br> * paragraph [0001] * <br> * example 20 * <br> * paragraph [0106] * <br> ----- | 1-14 | |

**TECHNICAL FIELDS SEARCHED (IPC)**

B32B
C08J
C08L

The present search report has been drawn up for all claims

| Place of search | Date of completion of the search | Examiner |
|---|---|---|
| Munich | 1 April 2023 | Laudi, Ines |

## ANNEX TO THE EUROPEAN SEARCH REPORT
## ON EUROPEAN PATENT APPLICATION NO.

EP 22 31 5242

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2023

| Patent document cited in search report | | Publication date | Patent family member(s) | | Publication date |
|---|---|---|---|---|---|
| US 6051649 | A | 18-04-2000 | CA | 2196446 A1 | 01-08-1997 |
| | | | CN | 1165157 A | 19-11-1997 |
| | | | EP | 0787761 A1 | 06-08-1997 |
| | | | JP | 3245372 B2 | 15-01-2002 |
| | | | JP | 3482403 B2 | 22-12-2003 |
| | | | JP | H09241502 A | 16-09-1997 |
| | | | JP | 2002088240 A | 27-03-2002 |
| | | | KR | 970059211 A | 12-08-1997 |
| | | | SG | 77588 A1 | 16-01-2001 |
| | | | TW | 360682 B | 11-06-1999 |
| | | | US | 6051649 A | 18-04-2000 |
| WO 2021205117 | A1 | 14-10-2021 | CN | 115397918 A | 25-11-2022 |
| | | | EP | 4133012 A1 | 15-02-2023 |
| | | | FR | 3108912 A1 | 08-10-2021 |
| | | | KR | 20220164730 A | 13-12-2022 |
| | | | WO | 2021205117 A1 | 14-10-2021 |
| US 2005165175 | A1 | 28-07-2005 | AT | 320471 T | 15-04-2006 |
| | | | CA | 2369325 A1 | 26-07-2002 |
| | | | CN | 1367204 A | 04-09-2002 |
| | | | DE | 60209862 T2 | 04-01-2007 |
| | | | EP | 1227131 A1 | 31-07-2002 |
| | | | JP | 3610043 B2 | 12-01-2005 |
| | | | JP | 2002275371 A | 25-09-2002 |
| | | | KR | 20020063133 A | 01-08-2002 |
| | | | TW | I305793 B | 01-02-2009 |
| | | | US | 2002173596 A1 | 21-11-2002 |
| | | | US | 2005165175 A1 | 28-07-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5959042 A
- EP 0476963 A
- FR 7418913
- FR 7726678
- US 4331786 A
- US 4115475 A
- US 4195015 A
- US 4839441 A
- US 4864014 A
- US 4230838 A
- US 4332920 A
- EP 0342066 A